# EUROPEAN PATENT APPLICATION

(11) **EP 4 589 072 A1**
(43) Date of publication of application: **23.07.2025**
(21) Application number: 24153131.8
(22) Date of filing: 22.01.2024
(51) Int. Cl.: E02B 17/00, E02B 17/02, E02D 27/42

(54) **SUPPORT ASSEMBLY OF AN OFFSHORE INSTALLATION**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

The invention describes a support assembly (1) for an offshore installation (4, 5), which support assembly (1) comprises a transition piece (2) for mounting onto an offshore foundation (3); a plurality of support shelves (10), wherein each support shelf (10) extends radially outward from the transition piece (2); a platform (11) to accommodate equipment of the offshore installation (4, 5), which platform (11) comprises a mounting sleeve (12) dimensioned to fit about the transition piece (2); and wherein the mounting sleeve (12) comprises a plurality of downwardly-extending portions (120), each dimensioned to fit between two adjacent support shelves (10); and a plurality of lateral cut-outs (121), each formed in a downwardly-extending portion (120) and shaped to receive a support shelf (10). The invention further describes an offshore wind-powered water electrolysis plant (4, 5) comprising such a support assembly (1), and a method of installing such a support assembly (1).

## Description

### Background

The supporting structure of an offshore installation such as a wind turbine can be a monopile, a tripod, a jacket structure etc., carried by a foundation that is fixed to the seabed. Equally, the supporting structure can be a floating foundation. To facilitate access to a conventional offshore wind turbine - i.e. a wind turbine that exports electrical power to the grid - the supporting structure also carries a service platform, mounted for example on a transition piece between the supporting structure and the wind turbine, as will be familiar to the skilled person. The service platform of a conventional wind turbine need only be large enough to fulfil its function in providing personnel access to the wind turbine, providing room for hoisting apparatus such as a davit crane, and providing room for an auxiliary power supply during off-grid situations such as installation, maintenance, etc. For a 15 MW - 20 MW offshore wind turbine, such a conventional service platform can have dimensions in the order of 20 x 10 metres and a relatively low weight in the order of 100 metric tonnes.

Instead of primarily exporting electrical power, an offshore wind turbine can be used to provide power to drive a water electrolysis plant. Such an offshore wind turbine can be one of many wind turbines of a wind park or wind farm, and the hydrogen gas (H₂) generated by the wind turbines can be collected for transport to an onshore facility, for example by a subsea pipeline. The water electrolyser and its balance of plant (all modules required in order to operate the electrolyser) can be installed directly at the wind turbine. A power converter can be part of the balance of plant, for example. An advantage of placing the balance of plant close to the wind turbine itself is that power transmission losses can be minimized. In this way, for example, the entire output power of a wind turbine can be used directly to drive a PEM, alkaline or other electrolysis plant, thereby maximizing the efficiency of the installation. An installation comprising an offshore wind turbine and a wind-powered electrolyser plant can be referred to as a "decentralized offshore hydrogen plant" or simply "DOHP".

However, the total mass of a large water electrolysis plant can be in the order of several hundred metric tonnes, and the total area required to accommodate the necessary modules (which may be housed, for example, in multiple shipping container modules) can be very large, making it challenging to adapt the known types of offshore wind turbine support solutions to include a sufficiently large platform.

In one approach, the transition piece is redesigned to include a robust framework at its upper level, and a sufficiently large platform structure is mounted to the supporting framework. For a large-capacity electrolysis installation, the platform structure can comprise two levels. However, this approach can add significantly to the overall installation costs, since the transition piece must be redesigned to include the supporting framework, the wind turbine tower must be connected to the transition piece before the platform structure can be assembled, and the platform structure must be completed in situ before the electrolysis plant can be installed. The transportation and installation costs (requiring multiple journeys by specialist jack-up vessels and personnel presence on the platform) can be prohibitively high. Furthermore, the supporting framework must be sufficiently robust, and requires correspondingly large quantities of costly steel.

It is therefore an object of the invention to provide a more economical way of realizing an offshore wind-powered electrolysis installation.

This object is achieved by the claimed support assembly, by the claimed offshore wind-powered water electrolysis plant comprising such a support assembly, and by the claimed method of installing such a support assembly.

### Description

According to the invention, the support assembly for such an offshore installation comprises a transition piece for mounting onto an offshore foundation; a plurality of support shelves, wherein each support shelf extends radially outward from the transition piece; a platform to carry equipment of the offshore installation, which platform comprises a mounting sleeve dimensioned to fit about the transition piece; and wherein the mounting sleeve comprises a plurality of downwardly-extending sleeve portions, each dimensioned to fit in the space between two adjacent support shelves when the platform is lowered onto the transition piece. In other words, the mounting sleeve comprises a vertical cut-out between adjacent downwardly-extending portions. Each downwardly-extending sleeve portion comprises a lateral cut-out, shaped to receive or "fit about" a support shelf in a subsequent step when the platform is rotated to its final position relative to the transition piece.

The offshore installation shall be understood to be supported by a foundation such as a monopile, and to be secured to a transition piece mounted on the foundation. At least the upper portion of the transition piece can be assumed to have an essentially cylindrical form, i.e. the upper portion of the transition piece has the shape of a right cylindrical structure.

The support shelves can be equidistantly arranged about the transition piece. Alternatively, a group of more closelyspaced support shelves can be provided in a region corresponding to a heavily loaded area of the platform, while a group of more widely-spaced support shelves can be provided in a region corresponding to a less heavily loaded area of the platform.

An advantage of the inventive support assembly is that it does not require much modification of an established transition piece design. It is only necessary to include the annular arrangement of support shelves, which can be done in a favourably straightforward manner. Furthermore, the support shelves do not interfere with established transport and installation stages of the transition piece. Therefore, the modified transition piece can be realised at a favourably low cost. The platform that rests on the support shelves can also have a favourably straightforward structure. Since the platform can be populated at an onshore facility and installed by simply lowering it onto the waiting transition piece and turning it by a small amount, the installation costs of the inventive support assembly are favourably low.

In the context of the invention, an offshore installation shall be understood to comprise a wind turbine as well as further equipment carried by a platform. Without restricting the invention in any way, the offshore installation is discussed in the following as a wind-powered water electrolysis plant. Such an electrolysis plant can comprise any number of water electrolysers (e.g. PEM electrolysers, alkaline electrolysers, etc.) and modules comprising the balance of plant, for example a power converter, a backup power supply, an instrument air supply, a hydrogen compressor etc., as well as modules specific to the type of electrolysers. Such modules can for example include a water purifier and water polisher for a PEM electrolyser; an electrolyte mixer and electrolyte separator for an alkaline electrolyser, etc. All modules of the electrolysis plant are arranged on the platform of the inventive support structure. The wind turbine of such an offshore installation can have a rated power output in the order of 15 MW - 20 MW, of which 90% - 95% can be used to drive the water electrolysis plant, and it is assumed in the following that the electrolysis plant is dimensioned to utilize this available power. The reminding 5% - 10% of the wind turbine's output power is required to drive various auxiliary devices.

According to the invention, the offshore wind-powered water electrolysis plant or DOHP comprises an instance of the inventive support assembly, wherein the transition piece of the support assembly is mounted on an offshore foundation. The wind turbine of the DOHP is configured to provide power for the water electrolysis plant and comprises a tower which is connected to the transition piece of the support assembly. The DOHP also comprises a water electrolysis plant in place on the platform of the support assembly.

According to the invention, the method of installing such a support assembly comprises the steps of mounting the transition piece onto an offshore foundation previously erected at an installation site and transporting the platform to the installation site. Using a suitable hoisting apparatus, the platform is then lowered onto the transition piece to position each downwardly-extending sleeve portion of the mounting sleeve between two adjacent support shelves of the transition piece. In a subsequent step, the platform is turned relative to the transition piece until each lateral cut-out of the mounting sleeve engages with the corresponding support shelf, before finally releasing the platform from the hoisting apparatus.

Particularly advantageous embodiments and features of the invention are given by the dependent claims, as revealed in the following description. Features of different claim categories may be combined as appropriate to give further embodiments not described herein.

As indicated above, there are various types of water electrolysers. Since PEM water electrolysers and alkaline water electrolysers are particularly suited for wind-powered electrolysis plants, these may be mentioned in the context of exemplary configurations in the following. However, in the case of an offshore wind-powered electrolysis plant, it shall be understood that the invention is equally applicable to other suitable types of water electrolyser.

In the following, it may be assumed that the dimensions of the platform can be large, for example the platform can have an approximately square or rectangular shape with sides of about 35 metres in length. The mass of the loaded platform, i.e. the combined mass of the platform and a complete electrolysis plant, powered by a large-capacity wind turbine as indicated above, shall be understood to be in the order of 800 metric tonnes.

As explained above, the platform is mounted onto the previously installed transition piece. To this end, the platform can be conveyed to the installation site using a jack-up vessel equipped with a suitable crane that can hoist the platform from the deck onto the transition piece. In a particularly preferred embodiment of the invention, a populated platform is installed on the transition piece, i.e. the platform is already fully loaded with the electrolysis plant before it is shipped to the installation site. The expression "populated platform" shall be understood as a platform already carrying the electrolysis plant (all electrolyser modules as well as the balance of plant). In the following, any reference to "platform" may be understood to mean a populated platform. As mentioned above, the platform can be populated at an onshore facility, and the functionality of the electrolysis plant can be thoroughly tested prior to transport to the offshore installation.

To facilitate the step of turning the suspended platform before releasing it from the crane (i.e. before transferring its weight onto the transition piece), a tag-line arrangement can be deployed. For example, two or more tag-lines can be connected to suitable points on the platform. A motor-driven winch at the other end of a tag-line can be actuated to unwind or rewind the tag-line as appropriate. In this way, the spatial position of the platform can be adjusted to a high degree of precision. Once the platform is in its final position, i.e. "locked" to the transition piece, the crane is detached from the platform.

The modules of the electrolysis plant can be organized on the platform to optimally distribute their weight. For example, the platform can have a roughly "square" shape, with a centrally placed circular aperture for the wind turbine tower, and modules of the electrolysis plant arranged more or less evenly (as regards weight) about the tower. In this way, the weight of the loaded platform can be optimally transferred to the transition piece and from there to the foundation. The terms "mounting sleeve" and "central ring" can be regarded as synonyms and may be used interchangeably herein.

The platform can be constructed in any suitable manner. In a preferred embodiment of the invention, the platform comprises a circular aperture to accommodate the base of a wind turbine tower, so that the wind turbine tower can be lowered into place for connection to the transition piece. The mounting sleeve extends about the aperture. The lower diameter of the tower of a 15 MW wind turbine can be in the order of 7 - 8 metres, and the diameter of the transition piece at its uppermost level generally corresponds to the diameter of the tower base. In an exemplary embodiment, the platform can comprise a metal mesh floor bounded by railings, and the mesh floor is supported by a horizontal framework. To support the framework and mesh floor, the platform preferably comprises an arrangement of radially extending floor support beams that extend between the mounting sleeve and connection points of the framework. A floor support beam can be an I-beam or H-beam, for example.

The mounting sleeve can be realised in any suitable way. In a preferred embodiment of the invention, to ensure sufficient structural strength, the downwardly-extending portions of the mounting sleeve extend between an upper horizontal flange and a lower horizontal flange. These flanges can extend outward by a desired amount, i.e. the outer diameter of a flange can exceed the diameter of the transition piece by several metres, for example. The inner end of each floor support beam can be enclosed by the upper and lower horizontal flanges of the mounting sleeve, and can be welded or otherwise secured to a mounting sleeve portion.

The aperture in the platform can be slightly larger than the lower diameter of the tower to facilitate access to the tower base and the top of the transition piece. The mounting sleeve can have a diameter that is just large enough to allow the mounting sleeve to "slide onto" the transition piece (to position a support sleeve within each vertical cut-out of the mounting sleeve). In a preferred embodiment of the invention, to facilitate movement of the mounting sleeve over the transition piece, a low-friction interface is provided between the mounting sleeve and the transition piece. In a preferred embodiment of the invention, a number of sliding pads can be arranged at the inner surfaces of the mounting sleeve, for example at the inner surfaces of the downwardly-extending sleeve portions.

In a particularly preferred embodiment of the invention, each support shelf comprises an upwardly-facing contact surface that receives a downwardly-facing contact surface of the corresponding lateral cut-out during rotation of the platform. In other words, after rotation of the platform to its final position, the contact surfaces of each "pair" (support shelf and cut-out) will be in physical contact, so that the weight of the platform is transferred through this surface contact to the transition piece and from there to the foundation. The contact surfaces can be roughened to achieve a friction fit.

An established transition piece design can be adapted to include the support shelves. In a preferred embodiment of the invention, a support shelf is at least partially incorporated in the body or wall of the transition piece. For example, a support shelf can comprise one or more essentially vertical brackets and an essentially horizontal contact surface welded or otherwise secured to the bracket(s), and the inner regions of these elements can extend into the wall of the transition piece. In a particularly preferred embodiment of the invention, a support shelf extends through the wall of the transition piece and into its interior, and is designed so that only a relatively small fraction of the support shelf extends to the exterior. For example, the support shelf design described above - a contact surface and brackets visible at the exterior - can be constructed so that the visible portion comprises only a fraction of the total support shelf structure, with the hidden portion of the support shelf continuing in the transition piece body and the transition piece interior. In one exemplary embodiment, the brackets extend radially through the interior of the transition piece, converging at the central axis of the transition piece, where all brackets can be joined together. In an alternative approach, the brackets of each support shelf continue for several metres in an essentially vertical direction in the interior of the transition piece.

A support shelf and corresponding lateral cut-out (referred to collectively in the following as a "platform support feature") can have any suitable shape and size. For example, a support shelf can comprise an outwardly projecting horizontal element and a number of vertical brackets, and a lateral cut-out comprises a complementary shape so that, when the platform is brought to its final position, all complementary surfaces of a support feature meet or engage. In a preferred embodiment of the invention, the support shelves and lateral cut-outs are formed to allow a rotation of the platform through at least 5°, more preferably to allow a rotation in the order of 10°.

In a preferred embodiment of the invention, the total contact area of the support assembly - i.e. the total area of the contact surfaces of the support features - is at least 10 square metres. This total contact area can be distributed over a suitable number of support features, e.g. ten or twelve support features.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a transition piece of an exemplary embodiment of the inventive support assembly;
Figures 2 - 7 illustrate exemplary stages of the inventive method;
Figure 8 shows an exemplary the platform of the inventive support assembly after installation is complete;
Figure 9 shows a partial cross-section through an exemplary embodiment of the inventive support assembly;
Figure 10 and Figure 11 illustrate a further exemplary embodiment of the invention;
Figure 12 shows a partial cross-section through an exemplary embodiment of the inventive support assembly;
Figures 13 - 14 show conventional offshore wind turbine installations.

In the diagrams, like numbers refer to like objects throughout. Objects in the diagrams are not necessarily drawn to scale.

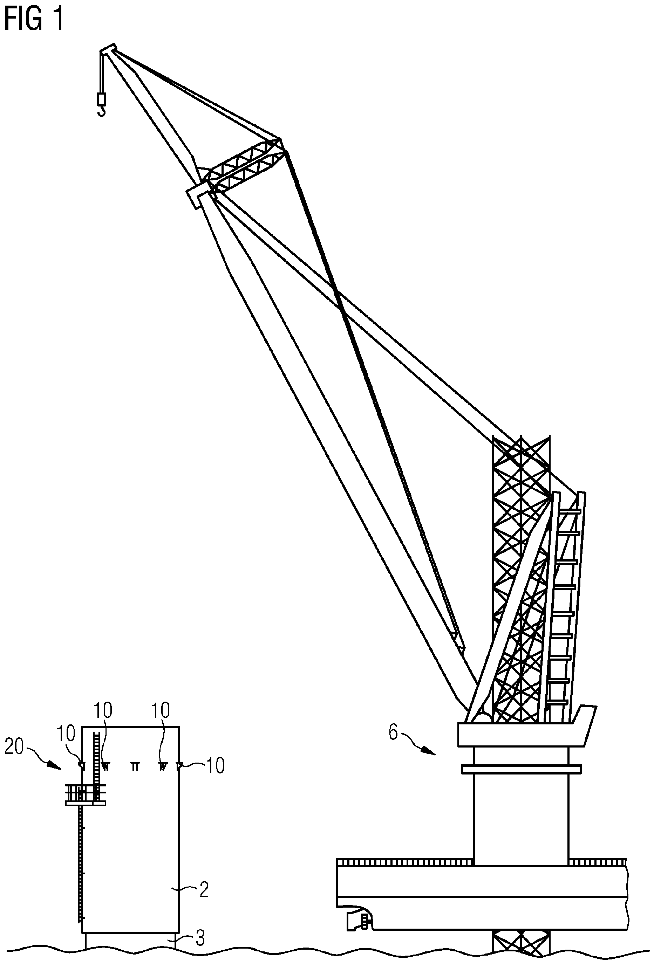

Figure 1 shows a transition piece 2 of the inventive support assembly. The transition piece 2 is designed to support a wind turbine as well as wind-powered electrolysis plant, and is mounted to a foundation 3 such as a monopile as indicated here. As shown in the diagram, the transition piece 2 comprises an annular arrangement of outwardly-protruding support shelves 10. In this exemplary embodiment, ten equidistantly-spaced support shelves 10 are arranged at the same level around the transition piece 2. The diagram also indicates a ladder assembly 20 which will - after installation is complete - allow personnel to move between the platform and a vessel moored to the transition piece 2.

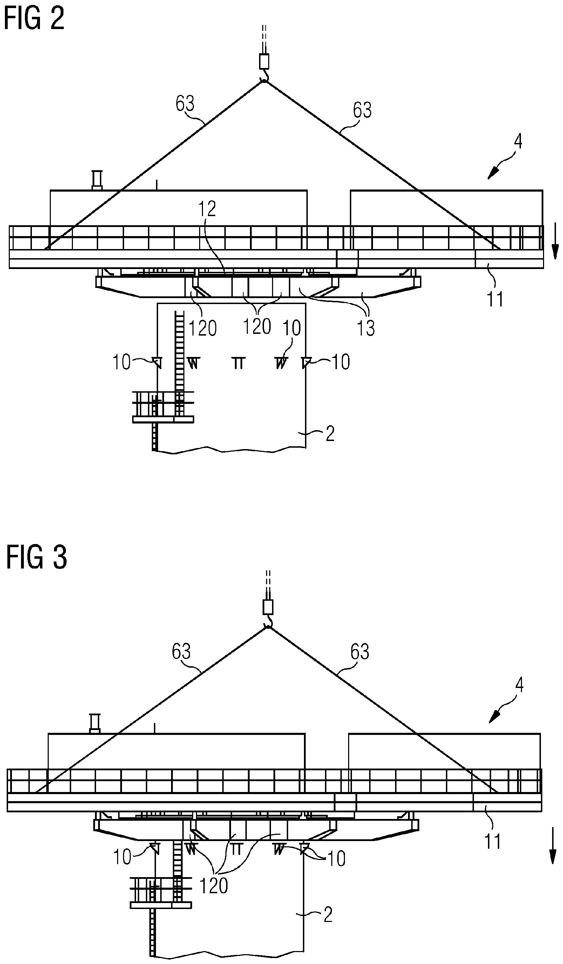

An installation vessel 6 (indicated schematically) such as a jackup vessel can transport a populated platform 11 to the installation site, for mounting to the transition piece 2. Figure 2 shows a platform 11 (previously populated with all modules of an electrolysis plant 4) being lowered into place onto the transition piece 2 of Figure 1. In the exemplary embodiment shown here, ten equidistantly-spaced vertical cut-outs 120 in the mounting sleeve 12 (or "central ring") of the platform 11 will allow the mounting sleeve 12 to pass the support shelves 10 while being lowered over the transition piece 2.

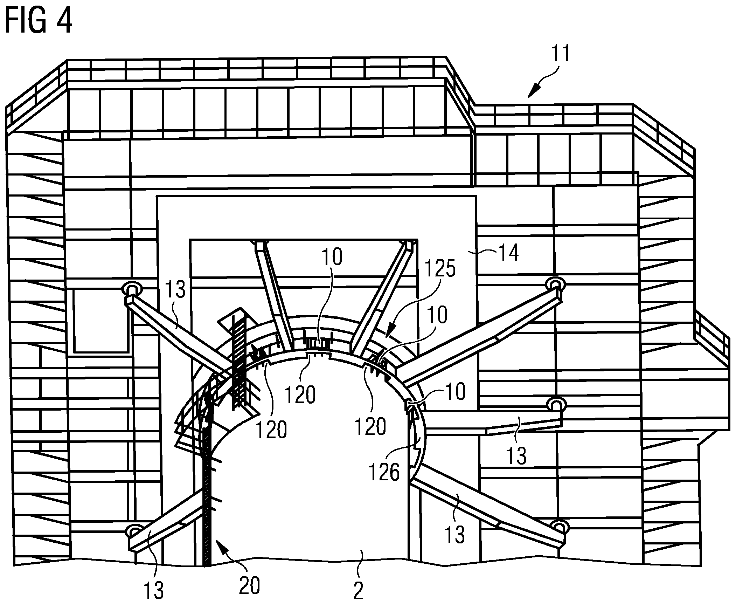

Figure 3 shows the platform 11 approaching the level of the support shelves 10, and Figure 4 gives a perspective view of this stage of the assembly procedure. From underneath, Figure 4 shows the central ring 12 of the platform 11 and indicates radially extending support beams 13 that extend to connection points on the underside of the platform floor. The central ring 12 comprises various radially extending flanges 125, 126 for providing structural strength and for connection to the support beams 13. As can be seen in the diagram, each vertical cut-out 120 is shaped to accommodate or "fit around" a support shelf 10 so that the platform 11 can be lowered to the level of its final position without initially coming into contact with the support shelves 10. A vertical cut-out 120 extends into the lower flange 126 so that the mounting sleeve 12 can pass over the support shelves 10 when the platform 11 is being lowered onto the transition piece 2.

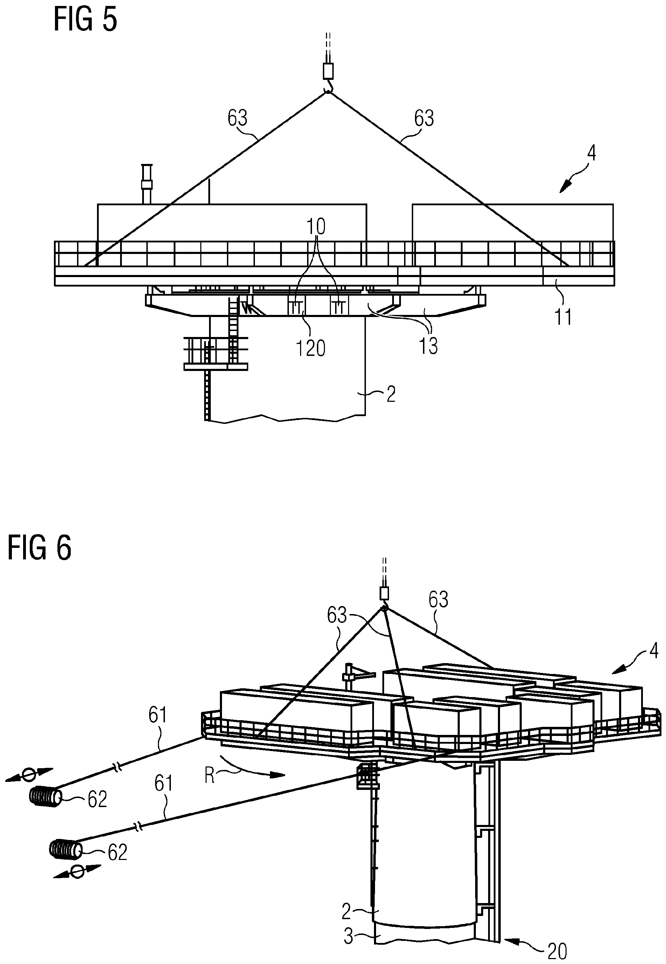

Figure 5 shows an elevation view of the inventive assembly after lowering the platform 11 onto the transition piece 2. The lateral cut-outs 121 in the central ring 12 of the platform structure 11, shown in Figures 2 - 5, are now aligned with the respective support shelves 10. At this stage, the weight of the platform 11 is still carried by the installation vessel crane 60 (as indicated by the lifting cables 63).

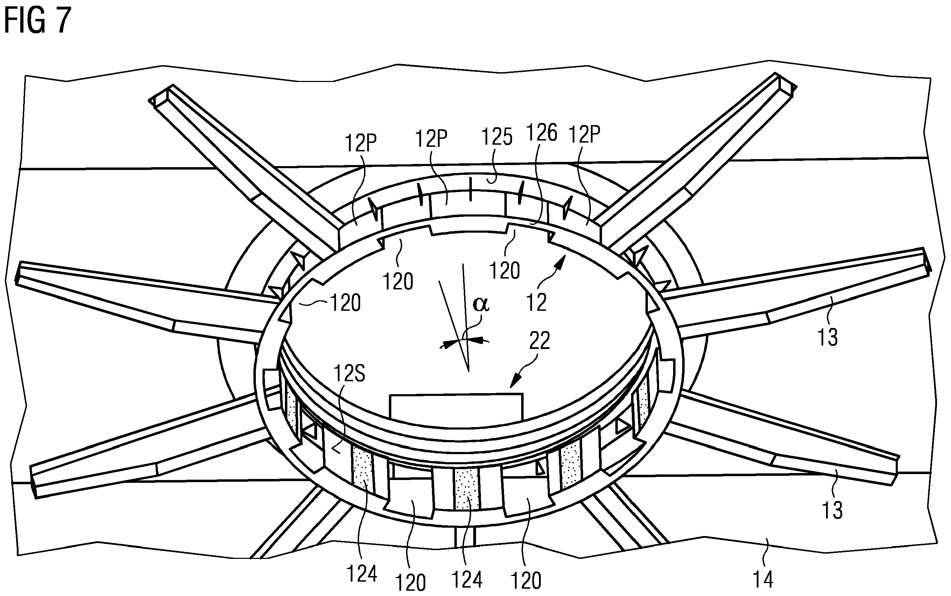

The next stage of the inventive method is to "lock" the platform 11 to the transition piece 2. This is done as illustrated in Figure 6, which shows a perspective view of the populated platform 11 still suspended from the crane, and tag lines 61 between the platform 11 and winches 62 (which can be located on the installation vessel). The winches 62 are deployed to pay out and rewind the tag lines 61 as appropriate, in order to effect a controlled rotation R of the platform 11 by the desired amount. This step is also illustrated with the aid of Figure 7, which shows an "inside view" in which only the support shelves 10 of the transition piece 2 are visible (the remainder of the transition piece 2 is rendered invisible in order to reveal the inside surface 12S of the platform's central ring 12). When the tag-line winches are actuated as described above, the platform 11 turns to engage the support shelves 10 with their respective lateral cut-outs 121. The angle α of rotation is determined by the dimensions of the support shelves 10 and lateral cut-outs 121 as indicated. In this exemplary embodiment, a displacement angle α of 5° is sufficient to engage the support shelves 10 with the contact faces 121F of their respective lateral cut-outs 121. The diagram also shows low-friction blocks 124 (comprising a suitable material such as nylon) attached to the inside of the mounting ring, to facilitate turning of the closely-fitting central ring 12 about the transition piece 2 during the rotation step.

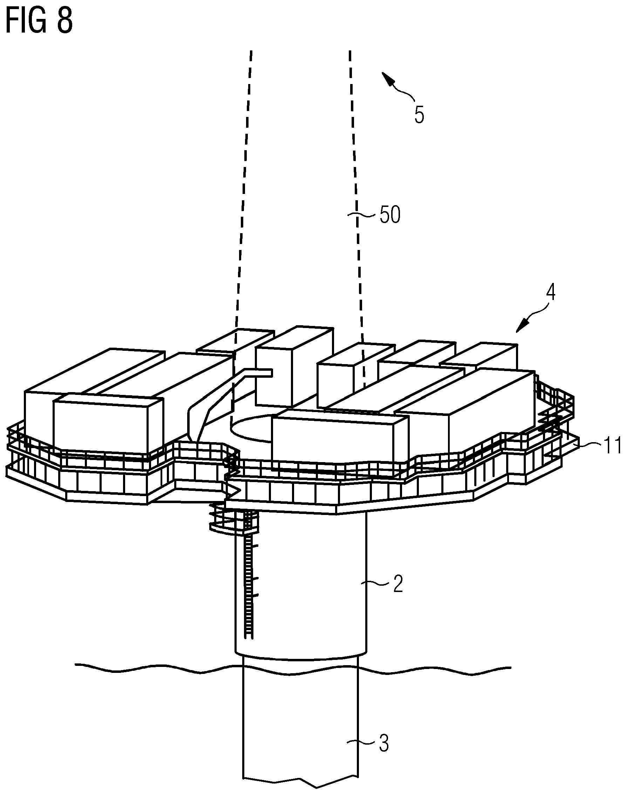

Figure 8 shows the platform 11 of the inventive support assembly 1 after its installation is complete. The diagram shows the platform 11 populated with an electrolysis plant 4 (i.e. electrolyser modules and balance of plant modules as described above), a davit crane for general hoisting manoeuvres, etc. A wind turbine tower 50 can now be connected to the transition piece 2 in the usual manner, and the completely installed and commissioned wind turbine 5 can then drive the electrolysis plant 4.

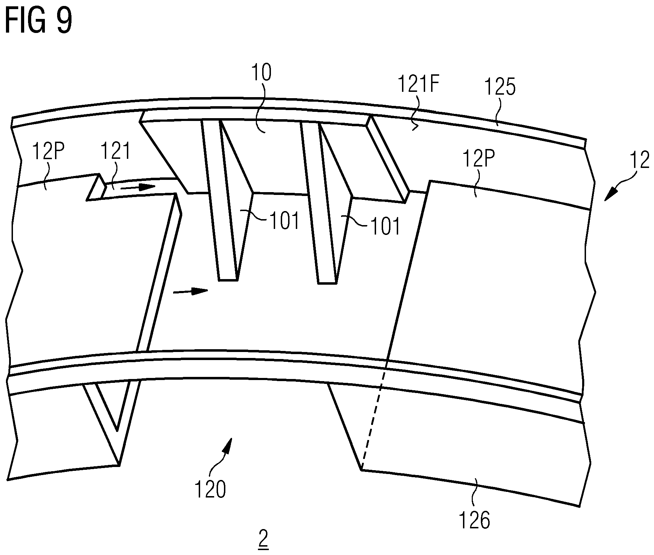

Figure 9 shows a partial perspective view the transition piece 2, a support shelf 10, and the central ring 12 of the platform 11. In this embodiment, a support shelf 10 has a horizontal contact plate 100 carried by two vertical brackets 101. The upper surface of the contact plate 100 is the contact surface 100F of the support shelf 10, and will receive a contact surface 121F of the mounting sleeve 12. The support shelf 10 is shown "inside" a vertical cut-out 120, and next to a sleeve portion 12P with a lateral cut-out 121. The diagram indicates how the weight of the platform 11 will be transferred to the transition piece 2 (and down to the foundation 3) when the platform 11 - along with the mounting sleeve 12 - is rotationally displaced as shown, causing the support shelf 10 to engage with the lateral cut-out 121 of the sleeve portion 12P.

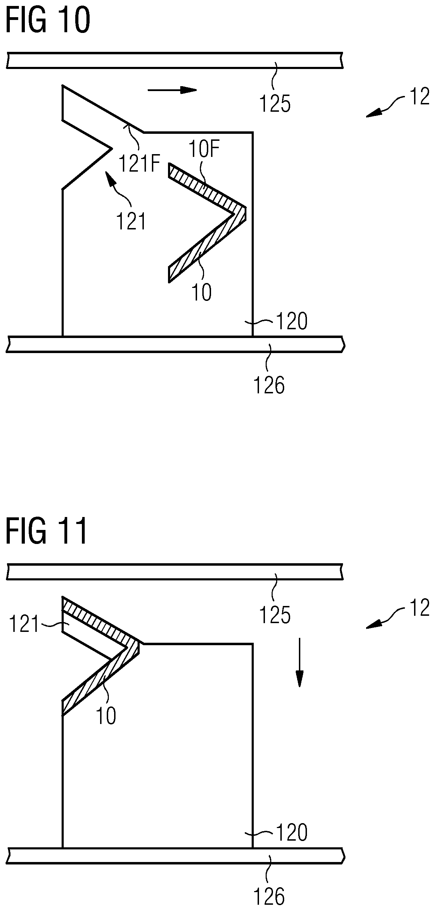

Figure 10 and Figure 11 illustrate a further embodiment of the invention. The simplified schematic diagrams show a portion of the central ring 12 about the transition piece 2. In this embodiment, each support shelf 10 is angled to a small extent, for example the contact surface 100F of a support shelf 10 can be angled by about 10° relative to the horizontal. Each lateral cut-out 120 has a corresponding shape, i.e. with a contact face 121F that is slanted by the same amount. In Figure 10, the platform 11 has been lowered to an initial level. In the next stage, the platform 11 is turned as described above to rotate the central ring 12 relative to the transition piece 2 (indicated by the horizontal arrow) so that the lateral cut-outs 120 move into place about the respective support shelves 10. In a final step as indicated in Figure 11, the platform 11 is lowered by a further amount (indicated by the vertical arrow) until the slanted contact face 121F of each cut-out 120 rests on the slanted surface 100F of its corresponding support shelf 10 as shown in the diagram. Additional contact faces 100F, 121F are provided in the lower region of the support feature 10, 121. In this embodiment, the force of gravity ensures that the platform 11 will never disengage from the support shelves 10, even in extreme conditions.

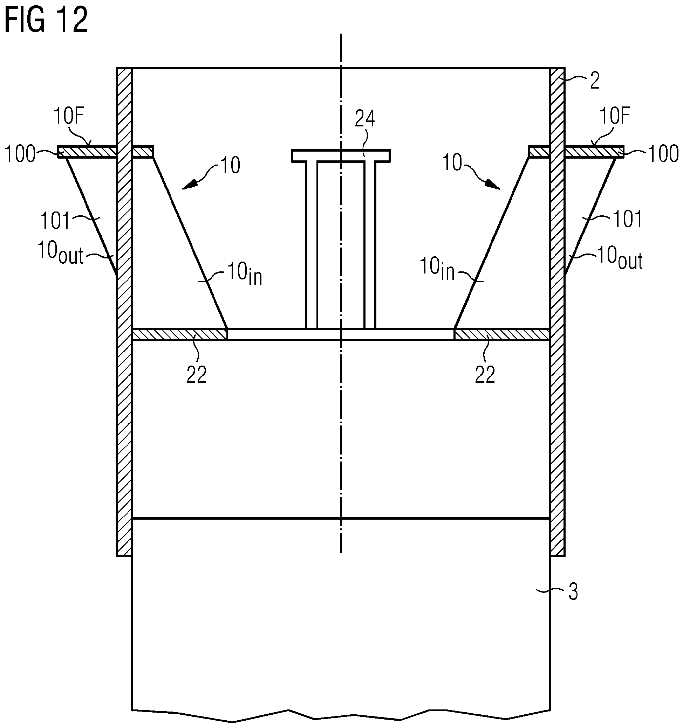

Figure 12 shows a partial cross-section through another exemplary embodiment of the inventive support assembly 1. Here, two diametrically opposed support shelves 10 are shown, one on the left-hand side and one on the right-hand side of the diagram. The basic structure of the support shelf can be as described, for example, in Figures 1 - 5 and Figure 9, although the underlying idea described here can of course apply to various other designs, i.e. that a significant fraction of a support shelf 10 is located in the interior of the transition piece 2. In the exemplary embodiment shown here, only about one third of each support shelf 10 extends beyond the outer surface of the transition piece 2. As the diagram shows, the slanting brackets 101 extend to a considerable distance downward into the interior of the transition piece 2. Here, the lower ends of the brackets 101 meet at an inwardly extending flange 22 positioned at a lower level in the interior of the transition piece 2. The upper ends of the brackets 101 can be welded to the contact plate 100 of the support shelf 10, while the lower ends of the brackets 101 can be welded to the interior flange 22. The flange 22 itself can be supported as appropriate by any suitable fittings (not shown). The diagram also indicates the possible shapes of slits 2 in the transition piece 2 that can be provided to accommodate the vertical brackets 101 and the horizontal contact plate 100 of a support shelf 10.

As indicated by the exemplary embodiments described above, the inventive support assembly requires only a minor modification to the established transition piece design, namely the addition of the support shelves 10. The platform 11 that rests on the support shelves 10 can have a favourably straightforward structure. Since the platform 11 can be populated at an onshore facility and installed by simply lowering it onto the waiting transition piece 2 and turning it by a small amount, the installation costs of the inventive support assembly 1 are favourably low.

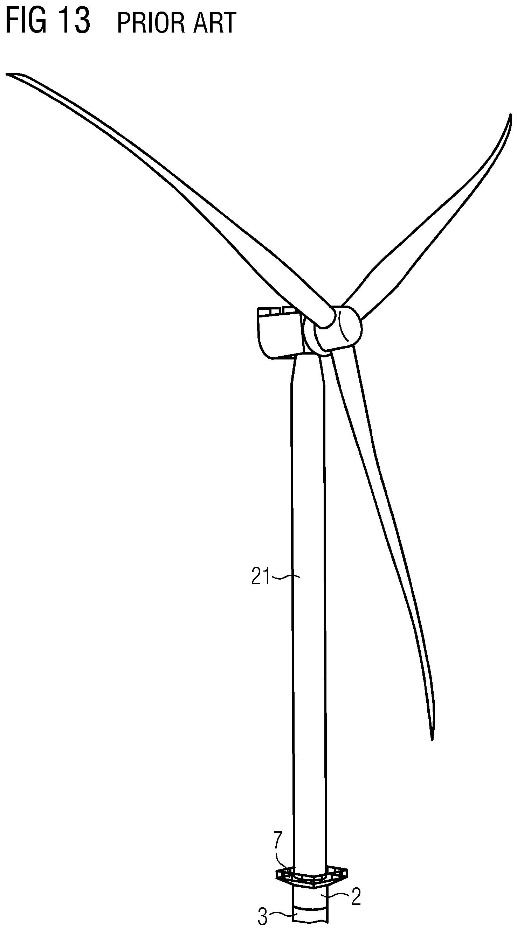

Figure 13 shows a conventional offshore wind turbine 5 that exports power to the grid. The wind turbine tower 50 is connected to a transition piece 2, which in turn is mounted to a foundation 3 such as a monopile as shown here. The diagram shows a typical service platform 7 at the base of the wind turbine tower 50, to facilitate personnel access to the tower. A davit crane can be a permanent fixture on the platform 7, for example to assist in hoisting equipment between a service/installation vessel and the service platform 7. The service platform 7 may also have room for a temporary auxiliary power supply, for example during installation of the wind turbine 5, to assist in maintenance routines during the service life of the wind turbine, etc. This relatively compact service platform 7 and transition piece 2 can be assembled and transported as one structure for mounting to the foundation 3.

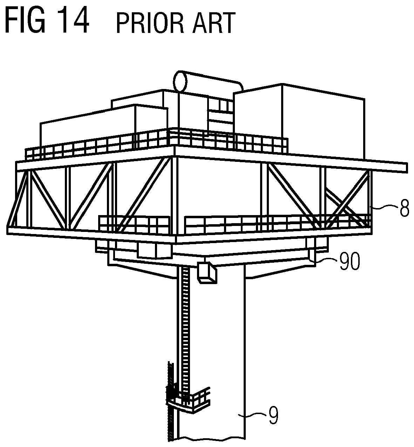

Figure 14 shows an offshore wind-powered electrolysis installation. Here also, the wind turbine tower is connected to a transition piece 9, which in turn is mounted to a foundation. The transition piece 9 can have the same dimensions as the conventional transition piece 2 of Figures 1 - 12, but is extensively modified to add a platform support interface 90 as shown here. The diagram shows a platform 8 that is large enough to accommodate all modules of an electrolyser plant. To arrive at the required surface area, the platform 8 is realised in this case as a two-storied structure. Since the wind turbine tower must be mounted to the transition piece 9 before the electrolyser platform 8 is installed, the platform 8 must be assembled (and transported) independently of the transition piece 9. After installation of the wind turbine tower, the platform 8 can be assembled and then populated with the electrolyser and its balance of plant. This prior art solution requires extensive modification of the established transition piece design which is used widely for conventional power-exporting wind turbines as indicated in Figure 13, and which is used with only a minor modification in the inventive support assembly 1 as shown in Figures 1 - 12. The prior art structure 8, 9 shown here requires significantly more material than the inventive support assembly 1, and incurs significantly higher installation costs than the inventive approach.

Although the present invention has been disclosed in the form of preferred embodiments and variations thereon, it will be understood that numerous additional modifications and variations could be made thereto without departing from the scope of the invention. For example, while the support structure lends itself particularly well for an offshore wind-powered water electrolysis installation, the platform of the support structure could equally be relatively small, for example for use as a general service platform of an offshore wind turbine that exports power to the grid. Here also, the ability to "twist lock" the platform onto the transition piece would simplify the installation procedure of the offshore wind turbine.

For the sake of clarity, it is to be understood that the use of "a" or "an" throughout this application does not exclude a plurality, and "comprising" does not exclude other steps or elements.

## Claims

1. A support assembly (1) for an offshore installation (4, 5), which support assembly (1) comprises
- a transition piece (2) for mounting onto an offshore foundation (3);
- a plurality of support shelves (10), wherein each support shelf (10) extends radially outward from the transition piece (2);
- a platform (11) to accommodate equipment of the offshore installation (4, 5), which platform (11) comprises a mounting sleeve (12) dimensioned to fit about the transition piece (2); and wherein the mounting sleeve (12) comprises
- a plurality of downwardly-extending portions (120), each dimensioned to fit between two adjacent support shelves (10); and
- a plurality of lateral cut-outs (121), each formed in a downwardly-extending portion (120) and shaped to receive a support shelf (10).

2. A support assembly according to the preceding claim, wherein the support shelves (10) and lateral cut-outs (121) are formed to allow a rotation of the platform (11) through an angle (α) of at most 10°, more preferably at most 5°.

3. A support assembly according to any of the preceding claims, wherein a support shelf (10) comprises an upwardly-facing contact surface (100F) to receive a downwardly-facing contact surface (121F) of the corresponding lateral cut-out (121) .

4. A support assembly according to the preceding claim, wherein a support shelf (10) further comprises a portion (lOin) extending into the interior of the transition piece (2), which inwardly extending portion (10in) comprises at least 50%, more preferably at least 70%, of the total support shelf (10).

5. A support assembly according to any of the preceding claims, wherein the platform (11) comprises a circular aperture (110) to accommodate the base of a wind turbine tower (50), and wherein the mounting sleeve (12) extends about the aperture (110).

6. A support assembly according to any of the preceding claims, wherein the mounting sleeve (12) comprises a plurality of outwardly-extending horizontal flanges (125, 126), and wherein the sleeve portions (120) extend between an upper horizontal flange (125) and a lower horizontal flange (126) .

7. A support assembly according to any of the preceding claims, comprising a low-friction interface (124) between the mounting sleeve (12) and the transition piece (2).

8. An offshore wind-powered water electrolysis plant (4, 5) comprising
- a support assembly (1) according to any of claims 1 to 7, wherein the transition piece (2) of the support assembly (1) is mounted on an offshore foundation (3);
- a wind turbine (5) comprising a tower (50) which is connected to the transition piece (2) of the support assembly (1);
- a water electrolysis plant (4) mounted on the platform (11) of the support assembly (1), and wherein the wind turbine (5) is configured to provide power for the water electrolysis plant (4).

9. An offshore wind-powered water electrolysis plant according to the preceding claim, wherein the platform (11) and the water electrolysis plant (4) have a combined mass in the order of 800 metric tonnes.

10. An offshore wind-powered water electrolysis plant according to claim 8 or claim 9, wherein the lower diameter of the wind turbine tower (50) is in the order of 8 metres.

11. A method of installing a support assembly (1) according to any of claims 1 to 7, which method comprises the steps of
- mounting the transition piece (2) onto an offshore foundation (3) previously erected at an installation site;
- transporting the platform (11) to the installation site;
- lowering the platform (11) onto the transition piece (2) to position each downwardly-extending sleeve portion (120) of the mounting sleeve (12) between two adjacent support shelves (10) of the transition piece (2); and
- turning the platform (11) relative to the transition piece (2) until each lateral cut-out (121) of the mounting sleeve (12) engages with the corresponding support shelf (10).

12. A method according to the preceding claim, comprising a preliminary step of assembling a platform (11) by:
- providing a mounting sleeve (12) dimensioned to fit about the transition piece (2);
- providing a platform floor (14); and
- connecting the platform floor (14) to the mounting sleeve (12) .

13. A method according to claim 11 or claim 12, comprising a preliminary step of populating the platform (11) with a complete water electrolysis plant (4).

14. A method according to any of claims 11 to 13, wherein the steps of installing the support assembly (1) are performed using a jackup vessel (6).

15. A method according to the preceding claim, wherein the step of turning the platform (11) relative to the transition piece (2) is performed using a number of taglines (61), each tagline (61) extending between the platform (11) and a winch (62) of the jackup vessel.
